Europäisches Patentamt

European Patent Office

Office européen des brevets

(11) Numéro de publication: **0 441 085 A1**

## (12) DEMANDE DE BREVET EUROPEEN

(21) Numéro de dépôt: 90460050.9

(51) Int. Cl.⁵: **B60P 1/60**

(22) Date de dépôt: **19.12.90**

(30) Priorité: **09.02.90 FR 9001795**

(43) Date de publication de la demande:
**14.08.91 Bulletin 91/33**

(84) Etats contractants désignés:
**BE DE DK ES GB IT NL SE**

(71) Demandeur: **Auffret, Jean**
**Route Nationale Saint Caradec**
**F-22600 Loudeac(FR)**

(72) Inventeur: **Auffret, Jean**
**Route Nationale Saint Caradec**
**F-22600 Loudeac(FR)**

(74) Mandataire: **Le Guen, Louis François**
**CABINET Louis LE GUEN 38, rue Levavasseur**
**B.P. 91**
**F-35802 Dinard Cédex(FR)**

(54) **Dispositif de nettoyage adaptable à un système de chargement et de déchargement d'une citerne à produits pulvérulents.**

(57) L'invention concerne un dispositif de nettoyage de tous les éléments de manutention qui est adaptable à un système de chargement de déchargement d'une citerne compartimentée à produits pulvérulents, tels que des aliments en poudre pour animaux, granules, céréales ou autres, ladite citerne pouvant être montée sur une remorque ou une semi-remorque.

Il comprend un aspirateur (22) dont l'orifice d'entrée (23) est branché, par l'intermédiaire d'une trappe (24, 29), sur le système de chargement et de déchargement pour créer, à l'intérieur du système de chargement et de déchargement (6 à 10), une dépression avec appel d'air, l'orifice de sortie (27) de l'aspirateur (22) étant en communication avec l'intérieur d'un caisson (26) présentant, dans sa partie inférieure, un col (37) sur lequel peut être monté, de manière étanche, l'entrée d'un sac de récupération (38) et, dans sa partie supérieure, une cheminée de détente (33) dont l'orifice d'entrée (34) est à l'intérieur du caisson (26) et l'orifice de sortie (35) à l'extérieur du caisson (26).

FIG.2

L'invention concerne un dispositif de nettoyage des éléments de manutention adaptables à un système de chargement et de déchargement d'une citerne à produits pulvérulents, tels que des aliments en poudre, farine, granules, céréales ou autres pour animaux, ladite citerne pouvant être montée sur un camion, une remorque ou une semi-remorque.

De telles citernes sont en général compartimentées et équipées d'un système de manutention qui comprend un transporteur longitudinal à vis sans fin passant sous l'orifice de sortie de chaque compartiment et, à l'arrière, un élévateur au bout duquel est branché un tuyau de déversement. Lors du déchargement d'un compartiment, on ouvre une trappe qui obture normalement l'orifice de sortie de ce compartiment et on met en route les différents éléments de manutention. Les produits en poudre stockés dans les compartiments sont alors entraînés par les éléments de manutention pour être déchargés sur le lieu de stockage.

Une fois le déchargement du compartiment effectué, on ferme la trappe et on arrête le transporteur et l'élévateur.

L'inconvénient des systèmes de déchargement de ce type réside dans le fait, qu'une fois le déchargement effectué, la vidange des éléments de manutention n'est pas intégrale. En effet, des particules de produits peuvent s'y être accumulées. Vue la configuration de ces systèmes, les quantités accumulées peuvent être importantes.

De plus, les compartiments peuvent contenir des produits de qualités différentes. Le fait de décharger à la suite les uns des autres de tels compartiments a pour résultat de mélanger les résidus des déchargements précédents avec le produit du déchargement présent. Les aliments déchargés sont alors perdus, car de tels mélanges avec des produits qui ne leur sont pas destinés peuvent ne pas convenir aux animaux.

Le but de l'invention est de prévoir un dispositif de nettoyage adaptable à un système de chargement et de déchargement de citerne contenant des produits tels que ceux mentionnés ci-dessus, ledit dispositif permettant de récupérer les particules de produits accumulées dans le système durant le déchargement d'un compartiment de la citerne afin d'éviter le mélange de différentes qualités de produits.

A cet effet, l'invention concerne un dispositif de nettoyage adaptable sur un système de chargement et de déchargement d'une citerne contenant des produits pulvérulents, tels que des aliments en poudre, farine, granules, céréales ou autres, ladite citerne étant montée sur un camion, une remorque ou une semi-remorque et étant divisée longitudinalement en une pluralité de compartiments, ledit système de chargement et de déchargement comprenant des trappes montées sur la partie inférieure de chacun des compartiments de la citerne et débouchant au-dessus d'un transporteur longitudinal à vis sans fin, un transporteur vertical monté à l'arrière de la remorque ou semi-remorque et en communication, par sa base, avec la sortie arrière du transporteur longitudinal et débouchant, de l'autre côté, dans un transporteur de sortie.

Selon une caractéristique de l'invention, il comprend un aspirateur dont l'orifice d'entrée est branché, par l'intermédiaire d'une trappe, sur le système de chargement et de déchargement pour créer à l'intérieur du système de chargement et de déchargement une dépression avec appel d'air.

Selon une autre caractéristique de l'invention, l'orifice de sortie de l'aspirateur est en communication avec l'intérieur d'un caisson présentant, dans sa partie inférieure, un col sur lequel peut être monté, de manière étanche, l'entrée d'un sac de récupération et, dans sa partie supérieure, une cheminée de détente dont l'orifice d'entrée est à l'intérieur du caisson et l'orifice de sortie à l'extérieur du caisson.

Selon une autre caractéristique de l'invention, le caisson est constitué d'une partie cylindrique d'axe vertical prolongée, dans sa partie inférieure, par une trémie tronconique au bout de laquelle est monté le col recevant le sac.

Selon une autre caractéristique de l'invention, l'aspirateur comprend une tuyère de sortie dont l'orifice de sortie est en communication avec l'intérieur du caisson, la tuyère étant d'axe horizontal et étant sensiblement tangente à la partie cylindrique du caisson.

Selon une autre caractéristique de l'invention, l'orifice d'entrée de l'aspirateur est branché sur le transporteur vertical du système de chargement et de déchargement.

Selon une autre caractéristique de l'invention, l'orifice d'entrée de l'aspirateur est branché à la base du transporteur vertical.

Selon une autre caractéristique de l'invention, l'aspirateur est constitué d'une turbine entraînée par un moteur hydraulique, électrique ou autre.

Selon une autre caractéristique de l'invention, le transporteur vertical est en communication avec le transporteur longitudinal par l'intermédiaire d'un transporteur transversal à vis sans fin.

Selon une autre caractéristique de l'invention, il est adaptable, de manière amovible, sur le système de chargement et de déchargement de la citerne.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue de côté d'une semi-remorque équipée d'un système de chargement et de déchargement pouvant être muni d'un dispositif de nettoyage selon l'invention,

la Fig. 2 est une vue montrant l'arrière gauche d'une semi-remorque équipée d'un dispositif de nettoyage selon l'invention, et

la Fig. 3 est une vue de côté d'un dispositif de nettoyage selon l'invention.

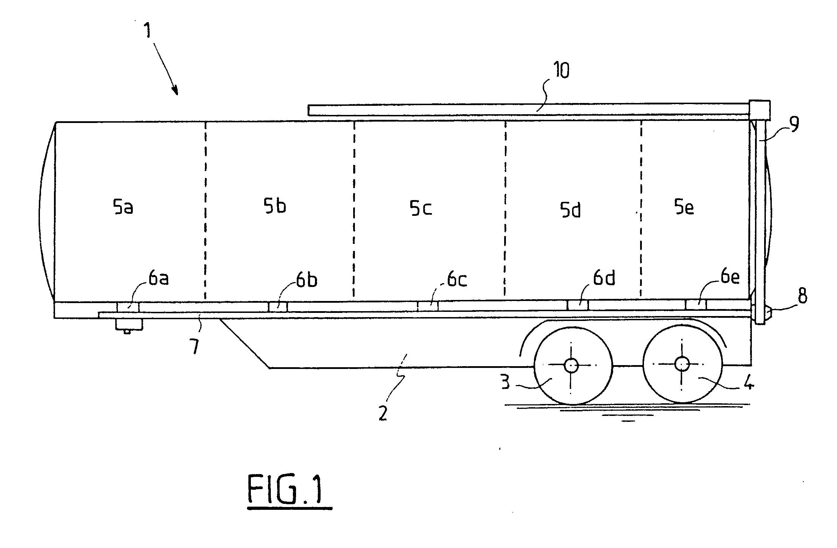

La semi-remorque représentée à la Fig. 1 comprend une citerne 1 montée sur un châssis 2 et est équipée de deux essieux 3, 4. La citerne 1 est divisée en plusieurs compartiments 5a à 5e dans lesquels sont stockés des produits pulvérulents, tels que des aliments en poudre pour animaux, granules, céréales ou autres. Un système de déchargement des compartiments est prévu et est constitué de trappes 6a à 6e respectivement montées à la partie inférieure des compartiments 5a à 5e, d'un transporteur longitudinal 7, d'un transporteur transversal 8, d'un transporteur vertical 9 et d'une transporteur 10. Les orifices de sortie des trappes 6a à 6e débouchent sur la partie supérieure du transporteur longitudinal 7.

Les compartiments 5a à 5e peuvent présenter, dans leur partie inférieure, une forme de trémie. Ils peuvent, cependant, présenter un fond plat. Dans ce cas, un système (non représenté), appelé, dans le domaine de la technique système "Redler", peut être prévu à l'intérieur des compartiments au niveau du fond.

Le transporteur transversal 8 (dont on ne voit que le profil sur la Fig. 1) est monté à l'arrière de la semi-remorque et est relié à la base du transporteur vertical 9 à l'extrémité supérieure duquel, est branché le transporteur de sortie 10. Le transporteur de sortie 10 peut se ranger sur le dessus de la citerne 1 ou être manipulé par des moyens (non représentés) appropriés.

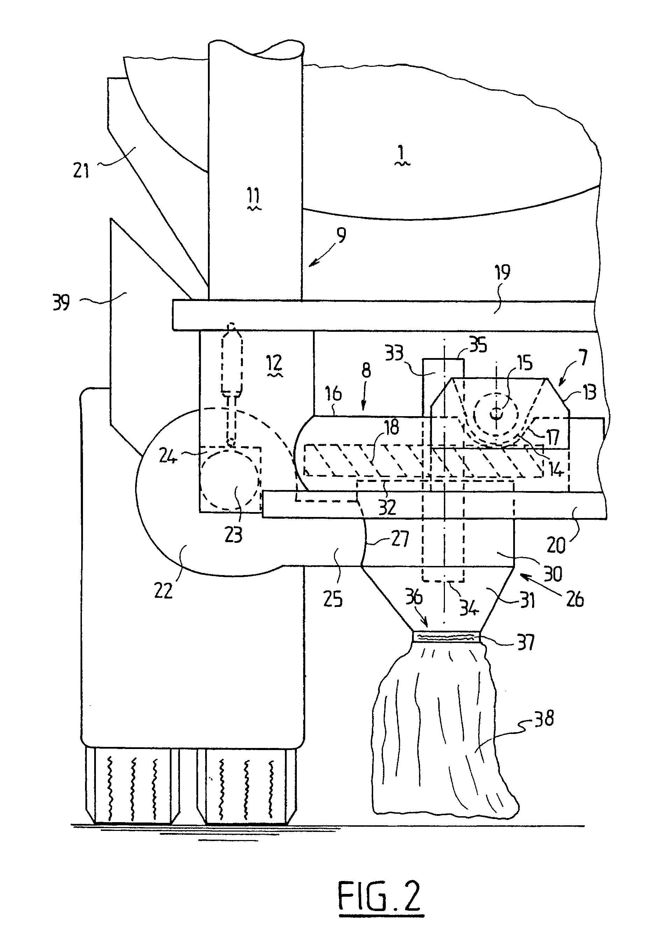

La Fig. 2 montre l'arrière de la semi-remorque représentée à la Fig. 1 et, en particulier, le système de déchargement et le dispositif de nettoyage faisant l'objet de la présente invention. Les éléments déjà représentés à la Fig. 1 portent les mêmes références. On y voit, en particulier, la citerne 1, le transporteur longitudinal 7, le transporteur transversal 8, et le transporteur vertical 9 constitué, extérieurement, d'un tube principal 11 et d'une embase cylindrique d'axe vertical 12.

Le transporteur longitudinal 7 est constitué d'un carter sensiblement parallélépipédique 13 et muni, à l'intérieur, d'une gouttière longitudinale 14 fermée. Dans la gouttière 14, est montée une vis sans fin longitudinale 15. Le transporteur transversal 8 est constitué d'un carter 16 sensiblement cylindrique qui, d'une part, présente, dans sa partie supérieure, une ouverture 17 placée juste au-dessous de l'extrémité arrière de la vis sans fin 15, celle-ci entrant, en quelque sorte, dans le carter 16 et qui, d'autre part, est fixé sur l'embase 12 du transporteur vertical 9. A l'intérieur du carter 16, est montée une vis sans fin transversale 18. Les vis sans fin 15, 18 sont entraînées, chacune, par un moteur hydraulique (non représenté).

Le châssis 2 de la Fig. 1 comporte, en fait, des longerons longitudinaux et transversaux, deux des longerons transversaux 19, 20 étant visibles sur la Fig. 2, ainsi que des supports de citerne montés, régulièrement espacés, sur toute la longueur du châssis (seul celui à l'arrière gauche 21 est visible sur la Fig. 2).

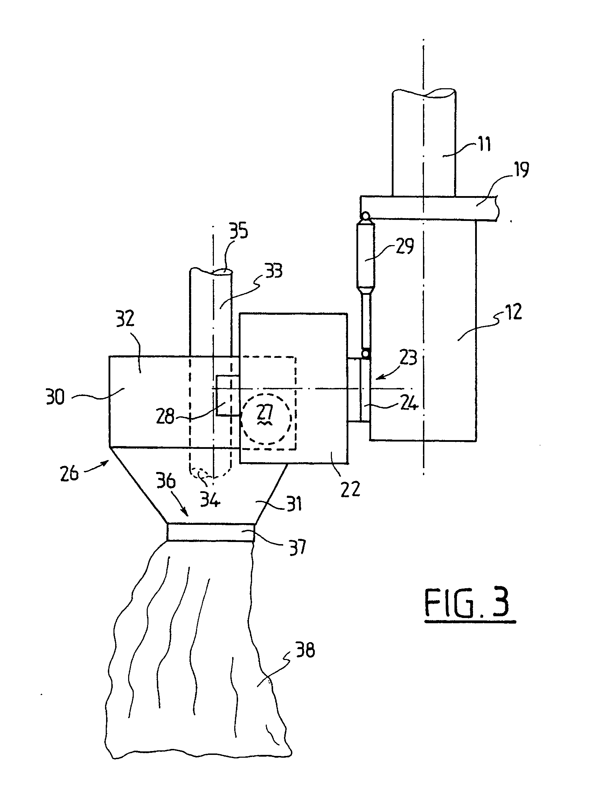

La description du dispositif de nettoyage de l'invention est faite en relation avec les Figs. 2 et 3. Il comprend un aspirateur 22 à turbine dont l'orifice d'entrée 23 est en communication, par l'intermédiaire d'une trappe 24, avec l'intérieur de l'embase 12 du transporteur vertical 9 et présente en sortie une tuyère 25 dont l'orifice de sortie 27 débouche dans un caisson 26. Avantageusement, la tuyère 25 est sensiblement tangente à la partie cylindrique 30 du caisson 26 (Fig. 3). La turbine de l'aspirateur 22 est entraînée par un moteur hydraulique 28. Sur l'arête supérieure de la trappe 24 est fixée la première extrémité d'un vérin dont l'autre extrémité est fixée sur le longeron 9 du châssis. La trappe 24 peut, par l'action du vérin 29, prendre une position fermée dans laquelle elle obture l'orifice d'entrée 23 de l'aspirateur 22 et une position ouverte dans laquelle l'aspirateur 22 est en communication avec l'intérieur du transporteur vertical 12.

Le caisson 26 comprend une partie cylindrique 30 prolongée, dans sa partie inférieure, par une trémie tronconique 31, et est fermé, dans sa partie supérieure, par une paroi horizontale 32. Une cheminée de détente 33 est prévue avec un orifice d'entrée 34 à l'intérieur du caisson 26 et un orifice de sortie 35 au-dessus du caisson 26, la cheminée 33 traversant la paroi horizontale 32 à laquelle elle est fixée. L'orifice d'entrée 34 de la cheminée 33 est sensiblement au niveau de la trémie 31, légèrement au-dessous de la partie basse du cylindre 30 du caisson 26. L'orifice de sortie 36 de la trémie 31 est pourvu d'un col 37 prévu pour recevoir un système de fixation (non représenté) de l'entrée d'un sac 38.

Les moteurs des transporteurs longitudinal 7, transversal 8, vertical 9 et de sortie 10, les trappes 6a à 6e, la trappe 24, le moteur 28 de l'aspirateur à turbine 22 etc., sont commandés à partir d'un tableau de commande 39 monté sur le châssis 2.

Pour le déchargement de l'un des compartiments 5, on ouvre la trappe 6 correspondante et on met en route le transporteur longitudinal 7, le transporteur transversal 8, le transporteur vertical 9 ainsi que le transporteur de sortie 10. Le produit contenu dans le compartiment 5 à vider tombe dans le transporteur longitudinal 7, soit par gravité, si le compartiment présente une forme de trémie, soit au moyen du râcleur monté dans le fond du compartiment. Il est ensuite entraîné dans chacun des transporteurs 7 à 9 ainsi que le transporteur de sortie 10 au bout duquel il sort.

Une fois le compartiment 5 complètement déchargé, on ferme la trappe 6 et on ouvre la trappe 24. On fixe ensuite le sac de récupération 38 sur le col de sortie 37 de la trémie 31 et on met en marche l'aspirateur à turbine 22.

Les particules accumulées sur les organes d'entraînement, tels que les vis sans fin 15, 18 des transporteurs 7, 8, ou les transporteurs vertical 9 et de sortie 10, sont soumises à une dépression et un courant d'air créé par l'aspirateur 22 et, entraînées par ce courant, sont refoulées dans le caisson 31. Dans cette première phase d'aspiration où la trappe 6 est fermée, ce sont essentiellement les particules des transporteurs 9 et 10 qui sont aspirées, du fait de l'appel d'air créé en bout du transporteur 10.

Du fait de la présence de la cheminée de détente 33, qui doit être d'un diamètre suffisamment grand, il règne, dans le caisson, une pression sensiblement atmosphérique. Par gravité, les particules dans le caisson 26 sont entraînées dans la trémie 31 puis dans le sac de récupération 38.

La tuyère 25 de l'aspirateur 22 étant tangente à la partie cylindrique 31 du caisson 22, les particules projetées par la tuyère 25 acquièrent un mouvement de révolution rapide autour de la cheminée. Elles perdent, petit à petit, leur énergie cinétique et tombent dans la trémie 31 et à l'intérieur du sac 38. L'avantage de cet arrangement réside dans le fait que les particules, perdant, en tournant, leur énergie cinétique, ne sont pas projetées dans le sac mais tombent, seulement soumises à la force de pesanteur, dans le sac. Ceci évite des projections par la cheminée de détente.

De plus, pour améliorer les performances du nettoyage, on fait tourner, pendant le nettoyage, les vis 15, 18 des transporteurs 7, 8 au ralenti.

Au bout d'un instant prédéterminé suffisamment long pour que les particules accumulées dans les transporteurs 9 et 10 soient aspirées, on ouvre la trappe 6 du compartiment 5 que l'on vient de vider. Par l'appel d'air créé à ce moment par la partie supérieure du compartiment 5 concerné, les particules restantes dans les vis 15 et 18 respectivement des transporteurs 7 et 8 ainsi que celles qui sont restées, lors du déchargement, dans le compartiment 5, sont aspirées par l'aspirateur 22 et récupérées dans le sac 38.

Puis on arrête les transporteurs 7, 8 et l'aspirateur 22 et on ferme la trappe 24.

Si l'on ne désire pas récupérer les produits accumulés dans le système de chargement et de déchargement, le caisson 26, avec sa cheminée 33, ne sont pas nécessaires et la sortie 27 de la tuyère 25 peut se faire à l'air libre.

Par ailleurs, les différents éléments qui constituent le dispositif de nettoyage de l'invention, peuvent être montés sur le châssis 2, pour le caisson 26, et sur l'embase 12 du transporteur vertical 9 de manière démontable. Une fois ces éléments démontés, la trappe 24 est fermée et le système de chargement et de déchargement fonctionne parfaitement sans système de nettoyage.

**Revendications**

1. Dispositif de nettoyage adaptable sur un système de chargement et de déchargement d'une citerne contenant des produits pulvérulents, tels que des aliments en poudre, farines, granules, céréales ou autres pour animaux, ladite citerne étant montée sur un camion, une remorque ou une semi-remorque et étant divisée longitudinalement en une pluralité de compartiments (5), ledit système de chargement et de déchargement comprenant des trappes (6) montées sur la partie inférieure de chacun des compartiments (5) de la citerne et débouchant au-dessus d'un transporteur longitudinal (7) à vis sans fin (15), un transporteur vertical (9) monté à l'arrière du camion, de la remorque ou semi-remorque et en communication, par sa base, avec la sortie arrière du transporteur longitudinal (7) et débouchant, de l'autre côté, dans un transporteur de sortie (10), caractérisé en ce qu'il comprend un aspirateur (22) dont l'orifice d'entrée (23) est branché, par l'intermédiaire d'une trappe (24, 29), sur le système de chargement et de déchargement pour créer, à l'intérieur du système de chargement et de déchargement (6 à 10), une dépression avec appel d'air et aspirer pour les entraîner à l'extérieur les particules restées à l'intérieur du système de chargement et de déchargement (6 à 10) lors du déchargement d'un compartiment (5).

2. Dispositif de nettoyage selon la revendication 1, caractérisé en ce que l'orifice de sortie (27) de l'aspirateur (22) est en communication avec l'intérieur d'un caisson (26) présentant, dans sa partie inférieure, un col (37) sur lequel peut être monté, de manière étanche, l'entrée d'un sac de récupération (38) et, dans sa partie supérieure, une cheminée de détente (33) dont l'orifice d'entrée (34) est à l'intérieur du caisson (26) et l'orifice de sortie (35) à l'extérieur du caisson (26).

3. Dispositif de nettoyage selon la revendication 2, caractérisé en ce que le caisson (26) est constitué d'une partie cylindrique (30) d'axe vertical prolongée, dans sa partie inférieure, par une trémie tronconique (31) au bout de laquelle est monté le col (37) recevant le sac (38).

4. Dispositif de nettoyage selon la revendication 2 ou 3, caractérisé en ce que l'aspirateur (22) comprend une tuyère de sortie (25) dont l'orifice de sortie (27) est en communication avec l'intérieur du caisson (26), la tuyère (25) étant d'axe horizontal et étant sensiblement tangente à la partie cylindrique (30) du caisson (26).

5. Dispositif de nettoyage selon une des revendications 1 à 4, caractérisé en ce que l'orifice d'entrée (23) de l'aspirateur (22) est branché sur le transporteur vertical (9) du système de chargement et de déchargement.

6. Dispositif de nettoyage selon la revendication 5, caractérisé en ce que l'orifice d'entrée (23) de l'aspirateur (22) est branché à la base du transporteur vertical (9).

7. Dispositif de nettoyage selon une des revendications 1 à 6, caractérisé en ce que l'aspirateur (22) est constitué d'une turbine entraînée par un moteur hydraulique, électrique ou autre (28).

8. Dispositif de nettoyage selon une des revendications 1 à 7, caractérisé en ce que le transporteur vertical (9) est en communication avec le transporteur longitudinal (7) par l'intermédiaire d'un transporteur transversal (8) à vis sans fin 18.

9. Dispositif de nettoyage selon une des revendications 1 à 8, caractérisé en ce qu'il est adaptable, de manière amovible, sur le système de chargement et de déchargement (6 à 10) de la citerne (1).

FIG.1

FIG.2

FIG.3

**Office européen
des brevets**

**RAPPORT DE RECHERCHE
EUROPEENNE**

Numéro de la demande

**EP 90 46 0050**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,A | US-A-4 017 281 (JOHNSTONE)<br>* colonne 4, lignes 26 - 52; figures 1-4 *<br>— — — | 1,2,3,7 | B 60 P 1/60 |
| Y | DE-U-1 861 380 (KIRST)<br>* figures 1, 2 *<br>— — — | 1 | |
| A | GB-A-8 038 91 (SMITH ET AL)<br>* figures 1-4 *<br>— — — | 1 | |
| A | PATENT ABSTRACTS OF JAPAN vol. 10, no. 40 (M-454)(2097) 18 février 1986,<br>& JP-A-60 191844 (SHINMEIWA KOGYO) 30 septembre 1985,<br>* le document en entier *<br>— — — — — | | |

| | | | DOMAINES TECHNIQUES RECHERCHES (Int. Cl.5) |
|---|---|---|---|
| | | | B 60 P |

Le présent rapport de recherche a été établi pour toutes les revendications

| Lieu de la recherche | Date d'achèvement de la recherche | Examinateur |
|---|---|---|
| Berlin | 26 avril 91 | LUDWIG H J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&  : membre de la même famille, document correspondant